# EUROPEAN PATENT SPECIFICATION

(11) **EP 0 851 126 B1**
(45) Date of publication and mention of the grant of the patent: **19.03.2003**
(21) Application number: 97204001.8
(22) Date of filing: 18.12.1997
(51) Int. Cl.: F04C 29/02, F04C 18/16

(54) **Screw machine and shaft bearing lubrication**
SPIRALMASCHINE UND LAGERSCHMIERUNG
Machine à vis et lubrification de paliers

(30) Priority: 23.12.1996 BE 9601077
(43) Date of publication of application: 01.07.1998
(60) Divisional application: 02077412.1
(73) Proprietor: ATLAS COPCO AIRPOWER N.V., 2610 Wilrijk (BE)
(72) Inventor: De Bock, Richard, 9170 Sint-Gillis-Waas (BE)
(74) Representative: Donné, Eddy

(56) References cited:
- EP-A- 0 154 673
- GB-A- 2 127 490

## Description

The present invention concerns a machine of the type consisting of a housing and two cooperating rotors erected therein which are bearing-mounted with shafts at their ends, whereby on at least one end of the housing, the shaft of each of the rotors rests in a pair of bearings, whereby the bearings of one pair are situated opposite the bearings of the other pair, and whereby at least one spray element for spraying lubricating liquid on said bearings is erected between the bearings of the pairs, and whereby between the bearings of each pair, a ring is provided around the shaft.

Such machines are for example compressors, tube expanders and pumps.

Especially with dry compressors whereby no lubricating liquid such as oil or water is injected on the rotors, the bearings are usually lubricated by continuously spraying oil on the bearings.

A compressor with bearing-mounted rotors of the above mentioned kind is disclosed in EP 0.154.673. On one end of the housing, the shaft of each rotor rests on a thrust bearing and an axial bearing. Between these bearings, a ring surrounds said shaft. The spray element is another ring surrounding at a distance said ring and provided with an oil feed ports.

In other known compressors, the spray element contains two tubes directed diagonally on the shafts which reach between the bearings of one pair, the other pair respectively, and which are provided at their ends with nozzles directed sideways on the bearings of the pair. As a result, the construction of this spray element is complicated and the oil distribution is not always ideal.

The present invention aims a machine with bearing-mounted rotors which does not show these and other disadvantages and whereby an effective lubrication of the bearings can be obtained with a simple spray element.

This aim is reached according to the invention in that, said ring provided around the shaft is provided with a tooth on its outer perimeter, whereas the spray element with nozzles is directed towards the tooth of the two toothed rings.

Thus, the spray element no longer sprays the lubricating liquid directly on the bearings, but on the rings which distribute said lubricating liquid with their tooth and bring it to the two bearings situated on either side thereof. The toothed rings turn along with the shafts and guarantee a good distribution.

Said spray element may contain two radial tubes which reach up between the bearings of the two pairs respectively and which are preferably connected to an axial tube which is connected to a duct which extends through the housing.

This duct can then be connected to a pump or such via a pipe.

According to another embodiment of the invention, on both ends of the housing the shafts of each of the rotors rest in a pair of bearings, the bearings of one pair on each of the ends of the housing being situated opposite the bearings of the other pair on the same end, but only the shafts on one end of the housing are surrounded with a toothed ring toward which the spray element is directed, while on the other end of the housing, the stationary outer ring and the rotating inner ring of one of the bearings of each pair extend on the side of the other bearing outside the bearing elements which they hold, while in the protruding part of said stationary outer ring extending outside the bearing elements are provided at least two openings, whereby in or opposite one opening is situated a nozzle of another spray element.

This other spray element may contain two tubes, one of which sticks in an opening in an outer ring of a bearing of one pair, and the other of which sticks in an opening in the outer ring of a bearing of the other pair.

The above-mentioned bearing with protruding parts of the rings is preferably a ball bearing and the protruding part of the rotating inner ring of this bearing preferably has a smaller thickness than the part of this inner ring situated on the other side in relation to the balls.

In order to better explain the characteristics of the invention, the following preferred embodiment of a machine with bearing-mounted rotors and liquid lubrication of the bearings according to the invention is described, as an example only without being limitative in any way, with reference to the accompanying drawings, in which:
figure 1 shows a section of machine according to the invention made as a compressor;
figure 2 shows the part indicated with F2 in figure 1 to a larger scale;
figure 3 shows a section analogous to that of figure 2, but parallel to and at a distance from the latter and with partial cut-outs;
figure 4 shows a section according to line IV-IV in figure 3;
figure 5 shows the part which is indicated in figure 1 with F5 to a larger scale.

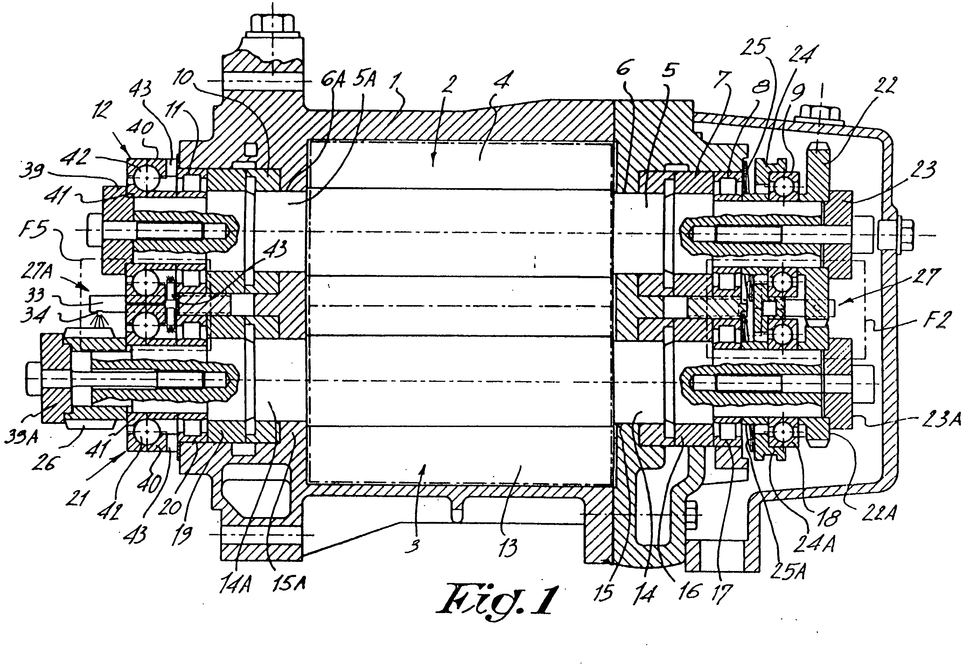

Figure 1 shows a screw-type compressor of the dry type, i.e. without any injection of lubricating liquid, which mainly contains a housing 1 and two cooperating rotors which are bearing-mounted therein, namely a female rotor 2 and a male rotor 3.

The housing 1 is provided with an air inlet which is not represented in the figures and an outlet for compressed air.

The female rotor 2 has a helical body 4 which is provided on both ends of a shaft 5, 5A respectively, which is situated in a shaft opening 6, 6A respectively in the housing 1.

The shaft 5 is surrounded at one end, in the shaft opening 6, by a shaft seal 7 and, on the outside of this seal, it is bearing-mounted in a pair of bearings, namely in a radial bearing 8, for example a roller bearing, which is provided in the housing 1, and a in an axial bearing 9, for example a ball bearing, which surrounds the shaft 5 outside the shaft opening 6.

In an analogous manner, the shaft 5A is surrounded at the other end of the rotor 2 by a shaft seal 10 and it is bearing-mounted in a pair of bearings, namely a radial bearing 11, for example a roller bearing, which is situated inside the housing 1, and an axial bearing 12, for example a ball bearing, which surrounds the shaft 5A.

The male rotor 3 has a body 13 which is complementary to the body 4 and which is provided on both ends with a shaft 14, 14A respectively, which is situated in a shaft opening 15, 15A respectively, in the housing 1.

The shafts 14 and 14A are bearing-mounted in the same manner as the shafts 5 and 5A.

The shaft 14 is surrounded at one end, in the shaft opening 15, by a shaft seal 16 which is similar to the shaft seal 7, bearing-mounted in a radial bearing 17 and in an axial bearing 18.

These bearings 17 and 18 of the shaft 14 are situated right opposite the bearing 8, the bearing 9 respectively, of the shaft 5.

The other shaft 14A is surrounded by a shaft seal 19 and is bearing-mounted in a radial bearing 20, for example a roller bearing, and an axial bearing 21, for example a ball bearing. These bearings 20 and 21 are situated exactly opposite the bearing 11, the bearing 12 respectively, of the shaft 5A.

On the shafts 5 and 14, on one end of the rotors 2 and 3, are fixed synchronization gears 22 and 22A which work in conjunction with one another, such that the rotor 3 drives the rotor 2 synchronously.

These gear wheels 22 and 22A are held against the axial bearings 9, 18 respectively, by end parts 23 and 23A screwed on the shafts 5 and 14. These bearings 9 and 18 are held against a part of the housing 1 and the radial bearings 8, 17 respectively, countersunk therein, by means of a ring 24, 24A respectively, and a corrugated spring 25, 25A respectively.

The male rotor 3 is driven by a motor via a gear wheel 26 on the shaft 14A which is part of a gear wheel transmission which is not represented in the figures.

The radial bearings 8, 11, 17 and 20 and the axial bearings 9, 12, 18 and 21 are lubricated with lubricating liquid, for example oil.

To this end, the compressor contains a spray element 27 at one end between the pair of bearings 8 and 9 on the shaft 5 and the pair of bearings 17 and 18 on the shaft 14 which is connected via a duct 28 through the housing 1 to a source of lubricating liquid under pressure which is not represented in the figures.

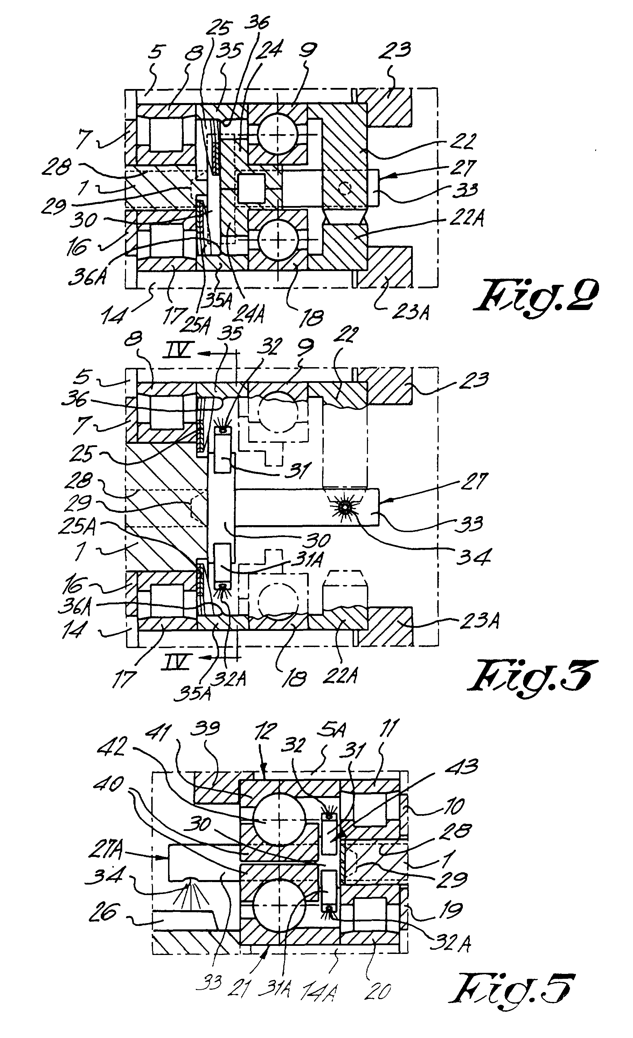

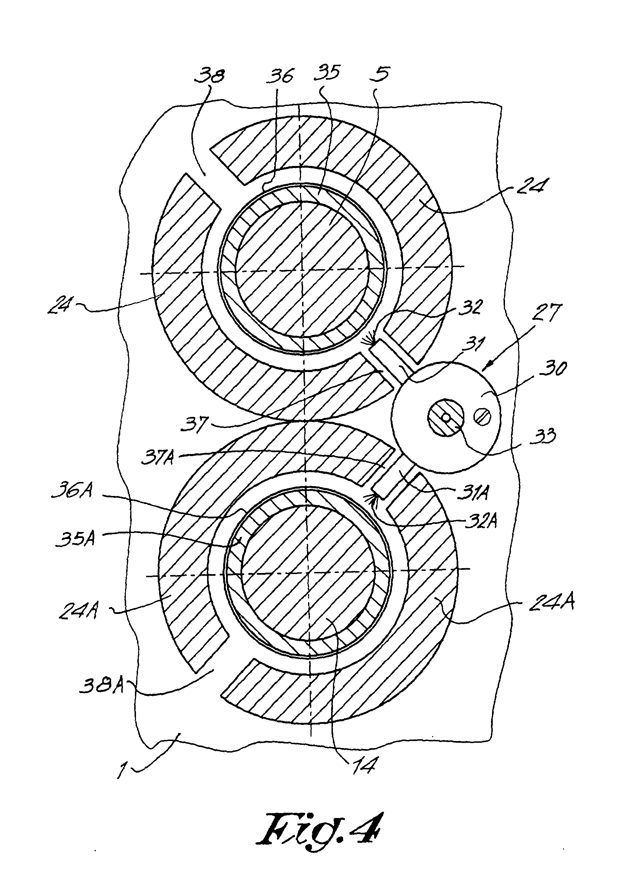

As is represented in the figures 2 to 4, the spray element 27 consists of an axial tube 29 which fits in the duct 28, a fixing part 30 with which the spray element 27 is fixed against a part of the housing 1, two sideward directed tubes 31 and 31A connected thereto which are each provided with a nozzle 32, 32A respectively at their end and which are connected to the inside of the tube 29, and an axial tube 33 which forms the prolongation of the tube 29 and which is provided near its end with a sideward directed nozzle 34.

The spray element 27 is directed with its two tubes 31 and 31A respectively between the two bearings 8 and 9 and between the two bearings 17 and 18, in particular onto a ring 35 which surrounds the shaft 5 between the bearings 8 and 9, onto a ring 35A respectively which surrounds the shaft 14 between the bearings 17 and 18.

These rings 35 and 35A are provided on their entire outer perimeter with a tooth 36, 36A respectively, which has an almost triangular section with two sloping sides, running into one point at the top.

The above-mentioned corrugated spring 25 and a part of the above-mentioned ring 24 surround the ring 35 around the shaft 5, whereas the corrugated spring 25A and a part of the ring 24A are situated around the ring 35A.

Also, the tubes 31 and 31A partly stick in openings 37 and 37A which extend radially through the ring 24, 24A respectively. Diametrically opposite the opening 37 or 37A is provided a second opening 38 or 38A in the ring 24 or 24A for discharging the lubricating oil.

Lubricating liquid which is sprayed through the nozzle 32 is directed to the bearings 8 and 9 by the tooth 36 of the ring 35, which turns along with the shaft 5, while lubricating liquid which is sprayed through the nozzle 32A by the tooth 36A of the ring 35A, which turns along with the shaft 14, is directed towards the bearings 17 and 18. As a result, these bearings 8, 9, 17 and 18 are efficiently lubricated.

Through the nozzle 34, lubricating oil is sprayed on the synchronization gear wheel 22 in order to lubricate the synchronization gear wheels 22 and 22A.

At the other end of the compressor, the bearings 11 and 12 are situated against one another and are pushed against one another by an end part 39 screwed on the shaft 5A. The stationary outer ring 40 of the bearing 12 pushes against a part of the housing 1.

Both the stationary outer ring 40 and the rotating inner ring 41 of the axial bearing 12, which is formed of a ball bearing, are extended on the side of the radial bearing 11 and are thus longer than in a normal ball bearing, so that they significantly protrude outside the bearing elements, namely the balls 42.

The protruding ring parts have a constant thickness, but the thickness of this part on the inner ring 41 is smaller than the thickness of the inner ring 41 on the other side of the balls 42, as is represented in detail in figure 5.

In the protruding part of the stationary outer ring 40 are provided radial openings 43.

The bearings 20 and 21 of the shaft 14A are designed and mounted in the same manner as the bearings 11 and 12. They are pushed against one another by an end part 39 which is screwed on the shaft 14A and with the help of the gear wheel 26, whereby the stationary outer ring 40 of the bearing 21 pushes against a part of the housing 1.

The bearings 11, 12, 20 and 21 are lubricated with oil which is sprayed through a spray element 27A which is identical to the above-mentioned spray element 27, and corresponding parts are indicated with the same figure of reference.

The tube 31 of this spray element 27A sticks in one of the radial openings 43 in the outer ring 40 of the axial bearing 12, whereas the tube 31A of this spray element 27A sticks in one of the radial openings 43 in the stationary outer ring 40 of the bearing 21, such that oil is sprayed on the inner rings 41 and thus on the bearings 11 and 12, 20 and 21 respectively, via the nozzles 32 and 32A.

Thus is obtained a good lubrication of these bearings 11, 12, 20 and 21.

Thanks to the integrated ducts 28 in the housing 1 and the spray elements 27 and 27A can be obtained a very well controlled oil distribution.

The present invention is by no means limited to the above-described embodiments represented in the accompanying drawings; on the contrary, such machines can be made in all sorts of variants while still remaining within the scope of the invention.

## Claims

1. Machine with bearing-mounted rotors consisting of a housing (1) and two cooperating rotors (2 and 3) erected therein which are supported on bearings (8-9 and 11-12, 17-18 and 20-21 respectively) with shafts (5 and 5A, 14 and 14A respectively) at their ends, whereby on at least one end of the housing (1), the shaft (5, 14 respectively) of each of the rotors (2 and 3) rests in a pair of bearings (8-9, 17-18 respectively), whereby the bearings (8 and 9) of one pair are situated opposite the bearings (17 and 18) of the other pair, whereby at least one spray element (27) is erected between the bearings (8 and 9, 17 and 18 respectively) of the pairs (8-9 and 17-18) for spraying lubricating liquid on said bearings (8-9-17-18), and whereby between the bearings (8 and 9, 17 and 18 respectively) of each pair (8-9 and 17-18), a ring (35, 35A respectively) is provided around the shaft (5, 14 respectively), **characterized in that** said ring (35, 35A respectively) is provided with a tooth (36, 36A respectively) on its entire outer perimeter, whereas the spray element (27) with nozzles (32, 32A respectively) is directed towards the tooth (36, 36A respectively) of the two toothed rings (35 and 35A).

2. Machine according to claim 1, **characterized in that** the spray element (27) contains two radial tubes (31 and 31A) which reach between the bearings (8 and 9, 17 and 18 respectively) of the two pairs (8-9 and 17-18) respectively.

3. Machine according to claim 2, **characterized in that** the radial tubes (31 and 31A) of the spray element (27) are connected to an axial tube (29) which is connected to a duct (28) which extends through the housing (1).

4. Machine according to any one of claims 1 to 3, **characterized in that** on both ends of the housing (1) the shafts (5,5A;14,14A) of each of the rotors (2,3) rest in a pair of bearings (8,9;11,12;17,18;20,21), the bearings (8,9;11,12) of one pair on each of the ends of the housing (1) being situated opposite the bearings (17,18;20,21) of the other pair on the same end, but only the shafts (5,14) on one end of the housing (1) are surrounded with a toothed ring (35,35A) toward which the spray element (27) is directed, while on the other end of the housing (1) the stationary outer ring (40) and the rotating inner ring (41) of one of the bearings (12, 21 respectively) of each pair (11-12 and 20-21) extend on the side of the other bearing (11, 20 respectively) outside the bearing elements (42) which they hold and in the protruding part of said stationary outer ring (40) extending outside the bearing elements (42) are provided at least two openings (43), whereby in or opposite one opening (43) is situated a nozzle (32 or 32A) of another spray element (27A).

5. Machine according to claim 4, **characterized in that** this other spray element (27A) contains two tubes (31 and 31A) of which one tube (31) sticks in an opening (43) in an outer ring (40) of a bearing (12) of one pair (11-12) and the other tube (31A) sticks in an opening (43) in the outer ring (40) of a bearing (21) of the other pair (20-21).

6. Machine according to claim 4 or 5, **characterized in that** the bearing (12, 21 respectively) with the protruding parts of the rings (40-41) is a ball bearing.

7. Machine according to claim 6, **characterized in that** the protruding part of the rotating inner ring (41) of this bearing (12, 21 respectively) has a smaller thickness than the thickness of this inner ring (41) on the other side of the balls (42).

8. Machine according to any one of claims 4 to 7, **characterized in that** the bearing (12, 21 respectively) with the protruding rings (40, 41) of each pair (11-12 and 20-21) reaches up to the other bearing (11, 20 respectively) of the pair with the protruding parts of its rings (40 and 41).

9. Machine according to any one of the preceding claims, **characterized in that** it is a compressor.

## Patentansprüche

1. Maschine mit gelagerten Rotoren, bestehend aus einem Gehäuse (1) und zwei darin aufgestellten, zusammenwirkenden Rotoren (2 und 3), die von Lagern (8-9 und 11-12, beziehungsweise 17-18 und 20-21) mit Wellen (5 und 5A, beziehungsweise 14 und 14A) an ihren Enden getragen werden, wobei zumindest an einem Ende des Gehäuses (1) die Welle (5 beziehungsweise 14) jedes der Rotoren (2 und 3) in einem Paar Lager (8-9 beziehungsweise 17-18) aufliegt, wobei die Lager (8 und 9) eines Paares sich gegenüber den Lagern (17 und 18) des anderen Paares befinden, wobei zumindest ein Sprühelement (27) zum Aufsprühen von Schmierflüssigkeit auf besagte Lager (8-9-17-18) zwischen den Lagern (8 und 9 beziehungsweise 17 und 18) der Paare (8-9 und 17-18) aufgestellt ist, und wobei zwischen den Lagern (8 und 9 beziehungsweise 17 und 18) jeden Paares (8-9 und 17-18) ein Ring (35 beziehungsweise 35A) um die Achse (5 beziehungsweise 14) herum angebracht ist, **dadurch gekennzeichnet, dass** besagter Ring (35 beziehungsweise 35A) an seinem gesamten Außenumfang mit einem Zahn (36 beziehungsweise 36A) versehen ist, während das Sprühelement (27) mit Düsen (32 beziehungsweise 32A) zum Zahn (36 beziehungsweise 36A) der zwei mit Zähnen versehenen Ringe (35 und 35A) gerichtet ist.

2. Maschine gemäß Anspruch 1, **dadurch gekennzeichnet, dass** das Sprühelement (27) zwei radiale Leitungen (31 und 31A) enthält, die jeweils zwischen die Lager (8 und 9 beziehungsweise 17 und 18) der zwei Paare (8-9 und 17-18) reichen.

3. Maschine gemäß Anspruch 2, **dadurch gekennzeichnet, dass** die radialen Leitungen (31 und 31A) des Sprühelements (27) mit einer axialen Leitung (29) verbunden sind, die mit einem Kanal (28) verbunden ist, der sich durch das Gehäuse (1) erstreckt.

4. Maschine gemäß einem der Ansprüche 1 bis 3, **dadurch gekennzeichnet, dass** an beiden Enden des Gehäuses (1) die Wellen (5,5A;14,14A) jedes der Rotoren (2,3) in einem Paar Lager (8,9;11,12;17,18;20,21) aufliegen, wobei die Lager (8,9;11,12) eines Paares an jedem der Enden des Gehäuses (1) gegenüber den Lagern (17,18;20,21) des anderen Paares an demselben Ende angeordnet sind, jedoch nur die Wellen (5,14) an einem Ende des Gehäuses (1) von einem mit Zähnen versehenen Ring (35,35A) umgeben sind, auf den das Sprühelement (27) gerichtet ist, während am anderen Ende des Gehäuses (1) der stationäre äußere Ring (40) und der rotierende innere Ring (41) eines der Lager (12 beziehungsweise 21) jeden Paares (11-12 und 20-21) sich an der Seite des anderen Lagers (11 beziehungsweise 20) außerhalb der Lagerelemente (42) erstrecken, die sie halten, und in dem vorspringenden Teil des besagten stationären äußeren Rings (40), der sich außerhalb der Lagerelemente (42) erstreckt, zumindest zwei Öffnungen (43) angebracht sind, wobei in oder gegenüber einer Öffnung (43) eine Düse (32 oder 32A) eines anderen Sprühelements (27A) angeordnet ist.

5. Maschine gemäß Anspruch 4, **dadurch gekennzeichnet, dass** dieses andere Sprühelement (27A) zwei Leitungen (31 und 31A) enthält, wovon eine Leitung (31) in eine Öffnung (43) in einem äußeren Ring (40) eines Lagers (12) eines Paares (11-12) ragt und die andere Leitung (31A) in eine Öffnung (43) im äußeren Ring (40) eines Lagers (21) des anderen Paares (20-21) ragt.

6. Maschine gemäß Anspruch 4 oder 5, **dadurch gekennzeichnet, dass** das Lager (12 beziehungsweise 21) mit den vorspringenden Teilen der Ringe (40-41) ein Kugellager ist.

7. Maschine gemäß Anspruch 6, **dadurch gekennzeichnet, dass** das vorspringende Teil des rotierenden inneren Rings (41) dieses Lagers (12 beziehungsweise 21) eine geringere Dicke hat als die Dicke dieses inneren Rings (41) an der anderen Seite der Kugeln (42).

8. Maschine gemäß einem der Ansprüche 4 bis 7, **dadurch gekennzeichnet, dass** das Lager (12 beziehungsweise 21) mit den vorspringenden Ringen (40,41) jeden Paares (11-12 und 20-21) bis zu dem anderen Lager (11 beziehungsweise 20) des Paares mit den vorspringenden Teilen seiner Ringe (40 und 41) reicht.

9. Maschine gemäß einem der vorgenannten Ansprüche, **dadurch gekennzeichnet, dass** sie ein Kompressor ist.

## Revendications

1. Machine comprenant des rotors montés sur paliers, constituée par un carter (1) et par deux rotors coopérants (2 et 3) montés dans ledit carter, qui sont supportés sur des paliers (8 - 9 et 11 - 12, 17 - 18 et 20 - 21, respectivement) comprenant des arbres (5 et 5A, 14 et 14A, respectivement) à leurs extrémités, par laquelle, à au moins une extrémité du carter (1), l'arbre (5, 14, respectivement) de chacun des rotors (2 et 3) s'appuie sur une paire de paliers (8 - 9, 17 - 18, respectivement), par laquelle les paliers (8 et 9) d'une paire sont situés à l'opposé des paliers (17 et 18) de l'autre paire, par laquelle au moins un élément de pulvérisation (27) est monté entre les paliers (8 et 9, 17 et 18, respectivement) des paires (8 - 9 et 17 - 18) pour pulvériser un liquide de lubrification sur lesdits paliers (8 - 9 - 17 - 18), et par laquelle, entre les paliers (8 et 9, 17 et 18, respectivement) de chaque paire (8 - 9 et 17 - 18), on prévoit un anneau (35, 35A, respectivement) autour de l'arbre (5, 14, respectivement), **caractérisée en ce que** ledit anneau (35, 35A, respectivement) est muni d'une dent (36, 36A, respectivement) sur tout son périmètre externe, tandis que l'élément de pulvérisation (27) comportant des éjecteurs (32, 32A, respectivement) est orienté en direction de la dent (36, 36A, respectivement) de deux anneaux dentés (35 et 35A).

2. Machine selon la revendication 1, **caractérisée en ce que** l'élément de pulvérisation (27) contient deux tubes radiaux (31 et 31A) qui s'étendent entré les paliers (8 et 9, 17 et 18, respectivement) des deux paires (8 - 9 et 17 - 18, respectivement).

3. Machine selon la revendication 2, **caractérisée en ce que** les tubes radiaux (31 et 31A) de l'élément de pulvérisation (27) sont raccordés à un tube axial (29) qui est relié à un conduit (28) qui s'étend à travers le carter (1).

4. Machine selon l'une quelconque des revendications 1 à 3, **caractérisée en ce que**, aux deux extrémités du carter (1), les arbres (5, 5A ; 14, 14A) de chacun des rotors (2, 3) s'appuient sur une paire de paliers (8, 9 ; 11, 12 ; 17, 18 ; 20, 21), les paliers (8, 9 ; 11, 12) d'une paire à chacune des extrémités du carter (1) étant disposés à l'opposé des paliers (17, 18 ; 20, 21) de l'autre paire à la même extrémité, mais uniquement les arbres (5, 14) à une extrémité du carter (1) sont entourés par un anneau denté (35, 35A) en direction duquel est orienté l'élément de pulvérisation (27), tandis qu'à l'autre extrémité du carter (1), l'anneau externe stationnaire (40) et l'anneau interne rotatif (41) d'un des paliers (12, 21, respectivement) de chaque paire (11 - 12 et 20 - 21) s'étendent du côté de l'autre palier (11, 21 respectivement) à l'extérieur des éléments de paliers (42) qu'ils maintiennent, et dans la partie saillante dudit anneau externe stationnaire (40) s'étendant à l'extérieur des éléments de paliers (42), on prévoit au moins deux ouvertures (43), par laquelle dans ou à l'opposé d'une ouverture (43) est situé un éjecteur (32 ou 32A) de l'autre élément de pulvérisation (27A).

5. Machine selon la revendication 4, **caractérisée en ce que** cet autre élément de pulvérisation (27A) contient deux tubes (31 et 31A), un tube (31) parmi desdits tubes venant s'insérer dans une ouverture (43) pratiquée dans un anneau externe (40) d'un palier (12) d'une paire (11 - 12) et l'autre tube (31) venant s'insérer dans une ouverture (43) pratiquée dans l'anneau externe (40) d'un palier (21) de l'autre paire (20 - 21).

6. Machine selon la revendication 4 ou 5, **caractérisée en ce que** le palier (12,21, respectivement) comprenant les parties saillantes des anneaux (40 - 41) est un palier à billes.

7. Machine selon la revendication 6, **caractérisée en ce que** la partie saillante de l'anneau interne rotatif (41) de ce palier (12, 21, respectivement) possède une épaisseur inférieure à l'épaisseur de cet anneau interne (41) de l'autre côté des billes (42).

8. Machine selon l'une quelconque des revendications 4 à 7, **caractérisée en ce que** le palier (12, 21, respectivement) comprenant les deux anneaux saillants (40, 41) de chaque paire (11 - 12 et 20 - 21) s'étend jusqu'à l'autre palier (11, 25, respectivement) de la paire comprenant les parties saillantes de ses anneaux (40 et 41).

9. Machine selon l'une quelconque des revendications précédentes, **caractérisée en ce qu'**il s'agit d'un compresseur.
